# EUROPEAN PATENT SPECIFICATION

(11) **EP 2 874 213 B1**
(45) Date of publication and mention of the grant of the patent: **22.02.2017**
(21) Application number: 13816526.1
(22) Date of filing: 11.07.2013
(51) Int. Cl.: H01M 4/66, H01M 4/13, H01G 11/28, H01G 11/56, H01G 11/68, H01M 4/02, H01M 10/052

(54) **COLLECTOR, ELECTRODE STRUCTURE, NONAQUEOUS ELECTROLYTE CELL, AND ELECTRICITY STORAGE COMPONENT**
KOLLEKTOR, ELEKTRODENSTRUKTUR, ZELLE MIT WASSERFREIEM ELEKTROLYT UND STROMSPEICHERKOMPONENTE
COLLECTEUR, STRUCTURE D'ÉLECTRODE, CELLULE À ÉLECTROLYTE NON AQUEUX, ET COMPOSANT DE STOCKAGE D'ÉLECTRICITÉ

(30) Priority: 13.07.2012 JP 2012157672
(43) Date of publication of application: 20.05.2015
(73) Proprietor: Furukawa Electric Co., Ltd., Chiyoda-ku Tokyo 100-8322 (JP); UACJ Foil Corporation, Chuo-ku Tokyo 1030026 (JP); UACJ Corporation, Tokyo 100-0004 (JP)
(72) Inventor: KATO, Osamu, Tokyo 100-0004 (JP); MORISHIMA, Yasumasa, Tokyo 100-8322 (JP); ITO, Takayori, Tokyo 100-8322 (JP); HARA, Hidekazu, Tokyo 100-8322 (JP); IIDA, Takahiro, Tokyo 100-8322 (JP); KATAOKA, Tsugio, Kusatsu-shi Shiga 525-0042 (JP); INOUE, Mitsuya, Kusatsu-shi Shiga 525-0042 (JP); YAMABE, Satoshi, Kusatsu-shi Shiga 525-0042 (JP); HONKAWA, Yukiou, Tokyo 100-0004 (JP); SAITO, Sohei, Tokyo 100-0004 (JP); YAEGASHI, Tatsuhiro, Tokyo 100-0004 (JP)
(74) Representative: Gulde & Partner
(86) International application number: PCT/JP2013/069008
(87) International publication number: WO 2014/010681

(56) References cited:
- EP-A1- 1 125 334
- JP-A- H10 199 574
- JP-A- H11 297 332
- JP-A- S62 209 803
- JP-A- 2002 304 997
- JP-A- 2005 174 653
- JP-A- 2005 317 468
- JP-A- 2006 032 395
- JP-A- 2009 176 599
- JP-A- 2009 176 599
- JP-A- 2010 212 167
- JP-A- 2011 048 932

## Description

### TECHNICAL FIELD

The present invention relates to a current collector, an electrode structure and a non-aqueous electrolyte battery or electrical storage device.

### BACKGROUND

Application of lithium batteries to electronic appliances such as cellular phones and notebook computers has been increasing for their high energy density. In a lithium battery, lithium cobalt oxide, lithium manganese oxide, lithium iron phosphate and the like are used as a cathode active material, and graphite and the like are used as an anode active material. A lithium battery is typically composed of electrodes made of the active materials, a separator which is a porous sheet, and an electrolyte in which a lithium salt is dissolved. Such a lithium secondary battery is high in battery capacity and output and has a good charge-discharge property, and a service life thereof is relatively long.

Although a lithium battery has an advantage of high energy density, it is accompanied by problems associated with safety since it employs a non-aqueous electrolyte. For example, since it contains a non-aqueous electrolyte, a component of the non-aqueous electrolyte possibly decomposes along with heat generation, causing internal pressure to raise, which may lead to defects such as a swollen battery. Further, if a lithium secondary battery is overcharged, defects such as heat generation possibly occur. Moreover, there is a risk that heat generation or other defects are caused also by occurrence of an internal short-circuit.

Examples of means for enhancing safety of battery include prevention of elevation of internal pressure by means of a safety valve, and current interruption at the time of heat generation by incorporating a PTC (Positive Temperature Coefficient) element, whose resistance increases as temperature increases. For example, a method is known in which a PTC element is furnished to a cap portion of the cathode of a cylindrical battery.

However, the method of furnishing a PTC element to the cap portion of the cathode is accompanied by a problem that when a short circuit occurs and temperature is raised, it is not possible to suppress increase of a short circuit current.

A separator incorporated in a lithium battery has a function that, when abnormal heat generation occurs, resin melts and occludes pores of the separator, lowering ion-conductivity so as to suppress increase of a short-circuit current. However, a separator located distant from the heat-generating portion does not always melt, and the separator may shrink with heat, which brings about a risk that a short circuit is caused against the intent. As discussed above, the means for preventing heat generation caused by an internal short-circuit still have room for improvement.

To resolve the problem of an internal short circuit, in Patent Document 1, CC foil (carbon coated foil) having the PTC function is proposed where a resin layer in which a fluorine resin or an olefin-based resin is used as a binder and conductive particles are added thereto is formed on a conductive base material. Further, in Patent Document 2, a PTC layer is disclosed which comprises a macromolecular polymer (for example, polyethylene) to which carbon black is added. Moreover, in Patent Document 3, a resin layer is disclosed which is composed of a CC layer (carbon coated layer) having surface roughness Ra (arithmetic average roughness) of 0.5 to 1.0 µm.

### PRIOR ART DOCUMENTS

### Patent Documents

Patent Document 1: Japanese Unexamined Patent Application Publication No. 2001-357854
Patent Document 2: Japanese Unexamined Patent Application Publication No. H10-241665
Patent Document 3: Japanese Unexamined Patent Application Publication No. 2010-212167
JP2009176599 discloses a current collector comprising a conductive base material and a PTC resin layer formed on the conductive base material, the resin layer containing an organic resin and conductive particles.

### SUMMARY OF THE INVENTION

### TECHNICAL PROBLEM

However, the prior arts described in the above-mentioned documents had room for improvement with respect to the following points.

Firstly, in the PTC layer or the resin layer described in Patent Documents 1 to 3, in the case where conductive paths are formed densely such that conductivity is excessively high, the number of broken conductive paths will be small even when the binder expands and melts. On the other hand, if the conductive paths are too few, resistance at normal temperature will be too high causing a problem that an output property of a battery or an electrical storage device is lowered.

Secondly, in the PTC layer or the resin layer described in Patent Documents 1 to 3, exertion of the PTC function is a result of thermal expansion of the binder resin. Meanwhile, for the purpose of increasing capacity of batteries or electrical storage devices, an amount of an active material is tend to be increased, which is accompanied by increase in density of the active material layer, and thus, there is no room for thermal expansion of the PTC layer or the resin layer.

The present invention has been made in view of the above circumstances, and the object thereof is to provide a current collector provided with a PTC layer that has enough room for thermal expansion at the time of temperature elevation, while maintaining sufficient conductivity at normal temperature.

### SOLUTION TO PROBLEM

According to the present invention, a current collector, as disclosed in claim 1, is provided which comprises a conductive base material; and a resin layer formed on at least one surface of said conductive base material. Note that said resin layer contains an organic resin and conductive particles. A deposition amount of said resin layer on said conductive base material is 0.5 to 20 g/m². Rz (ten point average roughness) of the surface of said resin layer is 0.4 to 10 µm. Sm (average spacing of ruggedness) of the surface of said resin layer is 5 to 200 µm. Further, an average of resistance of said resin layer measured by the two-terminal method is 0.5 to 50 Ω.

With such a configuration, a current collector can be obtained which has a PTC layer that has enough room for thermal expansion at the time of temperature elevation, while maintaining sufficient conductivity at normal temperature.

Further, according to the present invention, an electrode structure is provided which comprises a current collector mentioned above; and an active material layer or an electrode material layer provided on said resin layer of said current collector.

Since the electrode structure is provided with the current collector mentioned above, it can secure sufficient conductivity at room temperature and exerts a sufficient safety function when a short circuit occurs.

Moreover, according to the present invention, a non-aqueous electrolyte battery or electrical storage device is provided which comprises a current collector mentioned above; and an active material layer or an electrode material layer provided on said resin layer of said current collector.

Since the non-aqueous electrolyte battery or electrical storage device is provided with the current collector mentioned above, it can secure sufficient conductivity at room temperature and exerts a sufficient safety function when a short circuit occurs.

### Advantageous effect of the invention

According to the present invention, a current collector can be obtained which has a PTC layer that has enough room for thermal expansion at the time of temperature elevation, while maintaining sufficient conductivity at normal temperature.

### BRIEF DESCRIPTION OF THE DRAWINGS

Fig. 1 is a cross-sectional view of the structure of an electrode structure according to an embodiment.
Fig. 2 is a cross-sectional view for explaining a problem of an electrode structure provided with a conventional PTC layer.
Fig. 3 is a cross-sectional view for explaining a problem of an electrode structure provided with a conventional PTC layer.
Fig. 4 is a cross-sectional view for explaining how the electrode structure according to the embodiment is different from the electrode structure provided with the conventional PTC layer.
Fig. 5 is a cross-sectional view showing a mechanism by which resistance of a PTC layer of the electrode structure according to the embodiment increases sharply.
Fig. 6 is a graph for explaining a method of determining blending ratio of a polypropylene-based resin and a polyethylene-based resin based on peaks appearing in DSC (differential scanning calorimetry).

### DESCRIPTION OF EMBODIMENTS

Hereafter an embodiment of the present invention will be described with reference to the drawing. Note that similar components are denoted by similar reference symbols in all figures, and their explanations are omitted where appropriate. Further, it should be understood that, in the present description, "A to B" means "greater than or equal to A and smaller than or equal to B".

### <Overall structure of electrode>

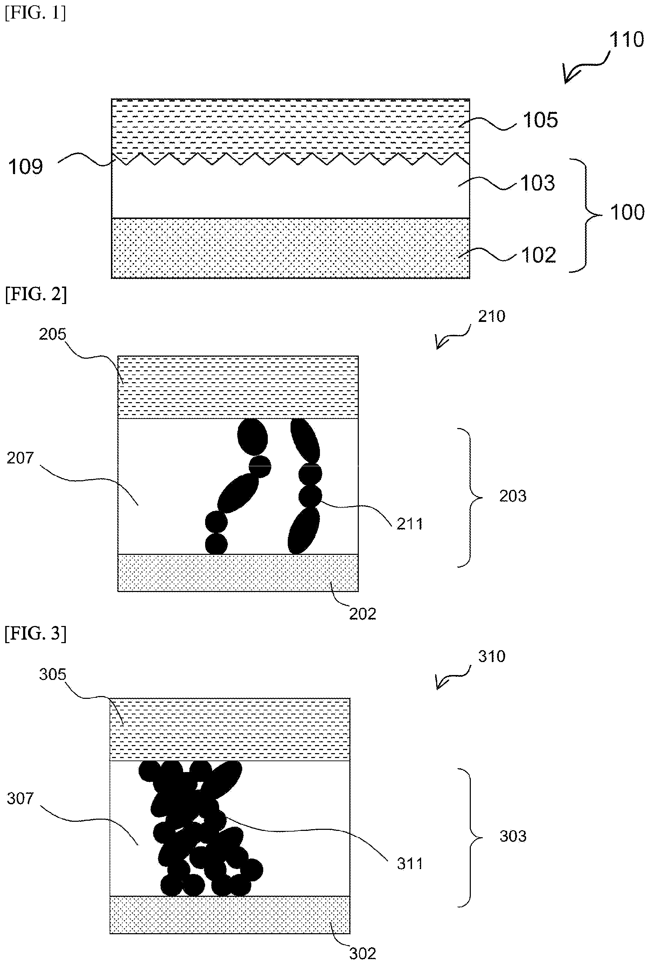

Fig. 1 is a cross-sectional view of the structure of an electrode structure according to the embodiment. The electrode structure 110 of the present embodiment is provided with a current collector 100. The current collector 100 is provided with a conductive base material 102 and a resin layer 103 which is provided on at least one surface of the conductive base material 102. In addition, the electrode structure 110 of the present embodiment is further provided with an active material layer (or electrode material layer) 105 provided on the resin layer 103 of the current collector 100. Note that the resin layer 103 has a roughened surface 109, as described later.

### <Problem of conventional PTC layer >

Fig. 2 is a cross-sectional view for explaining a problem of an electrode structure provided with a conventional PTC layer. In the electrode structure 210 provided with a conventional PTC layer 203, if conductive paths 211 are too few, resistance at normal temperature is too high, which causes a problem that an output property of a battery or an electrical storage device is lowered.

That is, as shown in Fig. 2, if conductive paths 211 are too few, when a binder resin 207 of the PTC layer 203 thermally expands (when film thickness of the PTC layer 203 becomes large), the conductive paths 211 are easily broken so that the safety function is exerted sufficiently when an internal short circuit occurs. However, there is a problem that resistance of the PTC layer 203 at normal temperature is so high that sufficient conduction is not achieved between the conductive base material 202 and the active material layer 205.

Fig. 3 is a cross-sectional view for explaining a problem of an electrode structure provided with a conventional PTC layer. In the electrode structure 310 provided with a conventional PTC layer 303, in the case where conductive paths 311 are formed so densely that conductivity is unnecessarily high, there is a problem that even when the binder resin 307 thermally expands and melts, only a few conductive paths 311 are broken.

That is, as shown in Fig. 3, if conductive paths 311 are too many, resistance of the PTC layer 303 at normal temperature is low so that sufficient conduction is achieved between the conductive base material 302 and the active material layer 305. However, when the binder resin 307 of the PTC layer 303 thermally expands (when a film thickness of the PTC layer 303 becomes large), the conductive paths 211 are hard to be broken so that a problem arises that the safety function is not exerted sufficiently when an internal short circuit occurs.

Further, in an electrode structure provided with a conventional PTC layer, exertion of the PTC function is a result of thermal expansion of the binder resin. Meanwhile, for the purpose of increasing capacity of batteries or electrical storage devices, an amount of an active material is tend to be increased, which is accompanied by increase in density of the active material layer, and thus, there is a problem that no room is left for thermal expansion of the PTC layer.

### <Roughened surface of resin layer>

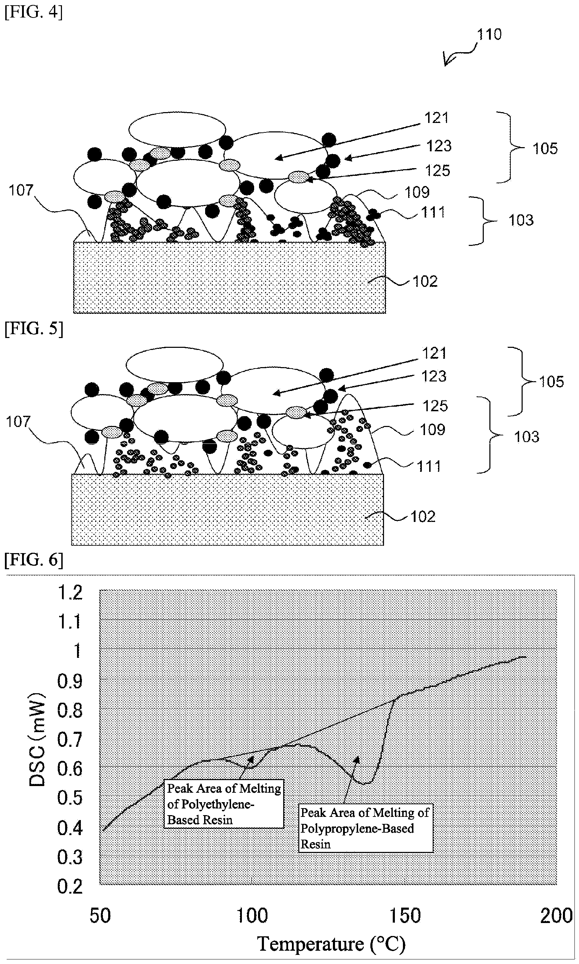

Fig. 4 is a cross-sectional view for explaining how the electrode structure according to the embodiment is different from the electrode structure provided with the conventional PTC layer. As described above, the electrode structure 110 of the present embodiment is provided with a conductive base material 102 and a resin layer 103 provided on at least one surface of the conductive base material 102. Note that the resin layer 103 has a roughened surface 109, as described below. Additionally, the electrode structure 110 of the present embodiment is further provided with the active material layer (or electrode material layer) 105 provided on the resin layer 103. The active material layer 105 contains an active material 121, a conductive material 123 and a binder 125.

The resin layer 103 contains an organic resin 107 and conductive particles 111. A deposition amount of the resin layer 103 on the conductive base material 102 is 0.5 to 20 g/m². Rz (ten point average roughness) of the roughened surface 109 of the resin layer 103 is 0.4 to 10 µm. Sm (average spacing of ruggedness) of the roughened surface 109 of the resin layer 103 is 5 to 200 µm. An average of resistance of the resin layer 103 measured by the two-terminal method is 0.5 to 50 Ω.

Fig. 5 is a cross-sectional view showing a mechanism by which resistance of a PTC layer of the electrode structure according to the embodiment increases sharply. With the use of the electrode structure 110, when temperature of the inside of a non-aqueous electrolyte battery or electrical storage device reaches the vicinity of the melting point of the organic resin 107, the organic resin 107 expands in volume and tears off the contact between the conductive particles 111 dispersed in the resin layer 103, so that the conductivity thereof decreases.

Since the electrode structure 110 of the present embodiment has the resin layer 103 having the special roughened surface 109, space suitable as room for thermal expansion of the resin layer 103 is successfully secured on the surface of the resin layer 103. Therefore, even if a volume change of the organic resin 107 at the time of melting is large, thermal expansion can take place without any incident, and thus, a good PTC property is obtained. That is, when temperature of the inside of a non-aqueous electrolyte battery or electrical storage device reaches the vicinity of the melting point of the organic resin 107 due to heat generation at the time of overcharging the non-aqueous electrolyte battery or electrical storage device, resistance of the resin layer 103 rises sharply so that electric current between the conductive base material 102 and the active material layer 105 is blocked. Accordingly, with use of the electrode structure 110, the safety function can be exerted sufficiently when an internal short circuit occurs in a non-aqueous electrolyte battery or electrical storage device.

That is, due to the configuration mentioned above, it is possible to obtain the electrode structure 110 which has two advantageous effects concurrently in a balanced manner that room for thermal expansion is offered at elevated temperature while sufficient conductivity is secured at normal temperature. It was difficult to achieve these two advantageous effects in parallel by the conventional electrode structures 210, 310 described with reference to Figs. 2 and 3. In contrast, with the electrode structure 110 of the present embodiment, since the resin layer 103 having the special roughened surface 109 is provided, the two advantageous effects, which contradict each other under normal conditions, are successfully achieved in parallel.

Hereafter, each component will be described in detail.

### <Conductive base material>

As the conductive base material 102, various metal foils for non-aqueous electrolyte batteries or electrical storage devices can be used. Specifically, various metal foils for cathodes and anodes can be used, and, for example, aluminum, copper, stainless steel, nickel and the like are usable. Among them, aluminum and copper are preferable in view of balance between high conductivity and cost. Note that, in the present description, aluminum means pure aluminum as well as aluminum alloy, and copper means pure copper as well as copper alloy. In the present embodiment, aluminum foil can be used for a secondary battery cathode, a secondary battery anode, or as an electrode of an electric double layer capacitor, and copper foil can be used for a secondary battery anode. Aluminum foil is not particularly limited, and various kinds can be used such as A1085 material, which is one of pure aluminum, A3003 material or the like. Similarly, copper foil is not particularly limited, and rolled copper foil or electrolytic copper foil is preferably used.

Thickness of the conductive base material 102 is not particularly limited, but preferably set to 5 µm or more and 50 µm or less. If the thickness is less than 5 µm, strength of the foil is sometimes insufficient, making formation of the conductive base material 102 or the like difficult. In contrast, if the thickness exceeds 50 µm, thickness of another component, especially the active material layer 105 or the electrode material layer, is forced to be reduced accordingly, therefore, in the case of being used as an electrical storage device such as a non-aqueous electrolyte battery or capacitor, the thickness of the active material layer 105 should inevitably be reduced, which sometimes lead to a failure in achieving the necessary and sufficient capacity.

### <Resin layer>

The resin layer 103 of the present embodiment is a PTC (Positive Temperature Coefficient) layer containing the organic resin 107 and the conductive particles 111, which are laminated on the surface of the conductive base material 102.

### (1) Structure of roughened surface

A deposition amount of the resin layer 103 on the conductive base material 102 is 0.5 to 20 g/m². If the amount is less than 0.5 g/m², non-deposited portions occur, resulting in an insufficient battery performance or an insufficient electricity-storing performance. If the amount is more than 20 g/m², resistance is too large, resulting in an insufficient battery performance or an insufficient electricity-storing performance. The deposition amount of the resin layer 103 may be, for example, 0.5, 1, 2, 5, 10, 15 or 20 g/m² as well as a value in the range between any two of the exemplified values.

Rz (ten point average roughness) of the roughened surface 109 of the resin layer 103 of the present embodiment is 0.4 to 10 µm. If Rz is less than 0.4 µm, room for thermal expansion is insufficient. If Rz is more than 10 µm, contact to the active material layer 105 is poor, resulting in an insufficient contact battery performance or an insufficient contact electricity-storing performance. Rz of the resin layer 103 may be, for example, 0.4, 0.7, 1, 2, 5 or 10 µm as well as a value in the range between any two of the exemplified values.

Sm (average spacing of ruggedness) of the roughened surface 109 of the resin layer 103 of the present embodiment is preferably 5 to 200 µm. If Sm is less than 5 µm, room for thermal expansion is insufficient. If Sm is more than 200 µm, the shape of the surface is too close to flatness and room for thermal expansion is insufficient. Sm of the resin layer 103 may be, for example, 5, 10, 20, 30, 40, 50, 60, 70, 80, 90, 100, 120, 140, 160, 180 or 200 µm as well as a value in the range between any two of the exemplified values.

An average of resistance of the resin layer 103 of the present embodiment measured by the two-terminal method is 0.5 to 50 Ω. When the average of resistance is within this range, a problem can be avoided that the conductive paths are broken by expansion of the organic resin 107 due to temperature elevation within a temperature range lower than the temperature at which shutdown is to be performed, so that the conductive paths are barely kept. Specifically, a value of 0.5 to 50 Ω of an initial resistance (measured on the resin layer 103 formed on the conductive base material 102) of the resin layer 103 measured by Loresta EP (two-terminal method), a resistivity meter manufactured by Mitsubishi Chemical Analytech Co., Ltd., is sufficient. If the average of resistance is less than 0.5 S2, resistance is insufficient when temperature is elevated. If the average of resistance is more than 50 Ω, performance as a battery or a rechargeable battery is insufficient.

As the resin used for the organic resin 107 of the resin layer 103 is not particularly limited and one or more kinds of resin selected from the group consisting of a fluorine-based resin, an olefin-based resin, an epoxy-based resin, an acrylic-based resin, a polyester-based resin, and a urethane-based resin can be used. Especially, among them, a fluorine-based resin or an olefin-based resin is preferably used.

### (2) Fluorine-based resin

The fluorine-based resin used as the organic resin 107 of the resin layer 103 is a resin that contains a fluorine resin as a resin component, and may consist only of a fluorine resin or contain a fluorine resin and another resin. A fluorine resin is a resin that contains fluorine, and examples thereof include a fluorine resin and derivatives thereof such as polyvinylidene difluoride (PVDF), polytetrafluoroethylene (PTFE), tetrafluoroethylene-perfluoro alkyl vinyl ether copolymer (PFA), tetrafluoroethylene-hexafluoropropylene copolymer (FEP), polychlorotrifluoroethylene (PCTFE), tetrafluoroethylene-ethylene copolymer (ETFE), chlorotrifluoroethylene-ethylene copolymer (ECTFE), polyvinyl fluoride (PVF), and a fluorine copolymer in which a fluoroolefin such as PCTFE and tetrafluoroethylene is copolymerized with cyclohexyl vinyl ether or carboxylic acid vinyl ester. Further, these compounds can be used alone or in combination of two or more, however, polyvinylidene difluoride (PVDF) is especially preferable in that it certainly possesses the shutdown function and an excellent high-rate property in parallel.

In the fluorine-based resin, a fluorine resin can be used at a rate of 100 % by mass as compared to the overall resin components, which is taken as 100 %, and can be used in combination with another resin component; when used in combination, it is preferable that the fluorine resin is usually contained at a rate of 40 % by mass or more, and more preferably 50 % or more, as compared to the overall resin components. This is because if the blending quantity of the fluorine resin is too small, control of conductive particles, described below, will not be successful, making it difficult to certainly achieve the shutdown function and an excellent high-rate property concurrently. The rate of the fluorine resin is specifically, for example, 40, 50, 60, 70, 80, 90 or 100 % by mass and may be a value in the range between any two of the exemplified values.

Weight average molecular weight of the fluorine-based resin is, for example, 30,000 to 1,000,000, and more specifically, for example, 30,000, 40,000, 50,000, 60,000, 70,000, 80,000, 90,000, 100,000, 150,000, 200,000, 300,000, 400,000, 500,000, 600,000, 700,000, 800,000, 900,000 or 1,000,000, and may be a value in the range between any two of the exemplified values. The weight average molecular weight means one that is measured by GPC (gel permeation chromatography).

It is preferable that the fluorine-based resin contains a carboxyl group or a carboxylic ester group (hereafter, referred to as "ester group" simply). This is because when a carboxyl group or an ester group is contained, adhesiveness between the conductive base material 102 and the resin layer 103 is enhanced. Further, in the case where the fluorine-based resin contains an ester group, adhesiveness between the fluorine-based resin and conductive particles (e.g., carbon particles) is enhanced.

The manner how the fluorine-based resin contains a carboxyl group (-COOH) or an ester group (-COOR, where R is a hydrocarbon with 1 to 5 carbon atoms) is not particularly limited, and, for example, the fluorine resin may be a copolymer of a monomer having a carboxyl group or an ester group and a monomer containing fluorine, the fluorine-based resin may be a mixture of a fluorine resin and a resin having a carboxyl group or an ester group, or the fluorine resin may be modified with a compound having a carboxyl group or an ester group. The method of modifying a fluorine resin is not particularly limited, and an example is disclosed in Japanese Unexamined Patent Application Publication No. 2002-304997, in which a fluorine resin is irradiated with a radioactive ray so that a fluorine atom is eliminated yielding a radical, and, in this state, the fluorine resin is mixed with a compound having a carboxyl group or an ester group, thereby the compound having a carboxyl group or an ester group is graft polymerized to the fluorine resin. The ratio of the number of carboxyl groups or ester groups to the number of fluorine atoms in the fluorine-based resin is not particularly limited, and, for example, 0.1 to 5, preferably 0.5 to 2. The ratio is specifically 0.1, 0.2, 0.5, 1, 1.5, 2, 3, 4 or 5 and may be a value in the range between any two of the exemplified values. Examples of the monomer (or compound) having a carboxyl group or an ester group include acrylic acid, methacrylic acid, ester of these acids (e.g., methyl methacrylate) and the like.

### (3) Olefin-based resin

The olefin-based resin used as the organic resin 107 of the resin layer 103 is a resin that contains an olefin resin as a resin component, and may consist only of an olefin resin or contain an olefin resin and another resin. Examples of the olefin-based resin include polyethylene, polypropylene, polybutene and polystyrene. Further, these compounds can be used alone or in combination of two or more, however, polyethylene and polypropylene are especially preferable in that they certainly possess the shutdown function and an excellent high-rate property in parallel.

In the olefin-based resin, an olefin resin can be used at a rate of 100 % by mass as compared to the overall resin components, which is taken as 100 %, and can be used in combination with another resin component; when used in combination, it is preferable that the olefin resin is usually contained at a rate of 40 % by mass or more, and more preferably 50 % or more, as compared to the overall resin components. This is because if the blending quantity of the olefin resin is too small, control of conductive particles, described below, will not be successful, making it difficult to certainly achieve the shutdown function and an excellent high-rate property concurrently. The rate of the olefin resin is specifically, for example, 40, 50, 60, 70, 80, 90 or 100 % by mass and may be a value in the range between any two of the exemplified values.

Weight average molecular weight of the olefin-based resin is, for example, 10,000 to 1,000,000, and more specifically, for example, 10,000, 30,000, 40,000, 50,000, 60,000, 70,000, 80,000, 90,000, 100,000, 150,000, 200,000, 300,000, 400,000, 500,000, 600,000, 700,000, 800,000, 900,000 or 1,000,000, and may be a value in the range between any two of the exemplified values. The weight average molecular weight means one that is measured by GPC (gel permeation chromatography).

It is preferable that the olefin-based resin contains a carboxyl group or a carboxylic ester group (hereafter, referred to as "ester group" simply). This is because when a carboxyl group or an ester group is contained, adhesiveness between the conductive base material 102 and the resin layer 103 is enhanced. Further, in the case where the olefin-based resin contains an ester group, adhesiveness between the olefin-based resin and the conductive particles (e.g., carbon particles) is enhanced. Carboxylic acid for modifying the olefin-based resin may be any of monocarboxylic acid, dicarboxylic acid and tricarboxylic acid; and acetic acid, acetic anhydride, maleic acid, maleic anhydride, trimellitic acid, trimellitic anhydride, fumaric acid, adipic acid, glutaric acid, succinic acid, malonic acid or oxalic acid can be used. This is because when a larger number of carboxyl groups are contained, though adhesiveness to the conductive base material is increased, dispersibility of the conductive particles decrease which sometimes makes resistance high.

Note that the olefin-based resin is preferably a copolymer with acrylic ester or methacrylic ester. Further acrylic ester or methacrylic ester preferably contains a glycidyl group. When acrylic ester or methacrylic ester is contained, adhesiveness to the conductive base material is increased resulting in increase of capacity retention. When a glycidyl group is contained, adhesiveness is further increased resulting in further increase of capacity retention.

Further, it is preferable that the olefin-based resin is a mixture of a polypropylene-based resin and a polyethylene-based resin. Blending ratio of the polypropylene-based resin and the polyethylene-based resin is, as shown in Fig. 6, determined by peaks appearing in DSC (differential scanning calorimetry). This is because if predetermined amounts of a polypropylene-based resin and a polyethylene-based resin are simply added, it is sometimes uncertain that a predetermined result is obtained because of variation in crystalline condition or the like. When DSC is performed on a coating film in which a polypropylene-based resin and a polyethylene-based resin are used, peaks resulting from thermal melting appears on the heating-up side. After performing thermal analysis by DSC on a coating film made of a mixture system of a polypropylene-based resin and a polyethylene-based resin as well as a conductive material, and then calculating an amount of heat of melting from a peak area of melting of each resin (area surrounded by the peak of thermal melting of each resin and a straight line), the blending ratio is determined based on the amount of heat of melting of each resin over the total amount of heat of melting of both resins. Specifically, blending ratio of the polypropylene-based resin is (amount of heat of melting of polypropylene-based resin) / (amount of heat of melting of polypropylene-based resin + amount of heat of melting of polyethylene-based resin) × 100 (%), and this value is preferably 95 % to 30 %.

### (4) Conductive particles

As the conductive particles 111 used for the resin layer 103 of the present embodiment, known conductive particles such as carbon powder and metal powder can be used, and among them, carbon black such as Furnace black, acetylene black, Ketjen black and the like is preferred. Especially those whose electrical resistance in the state of powder is 1×10⁻¹ Ω or less as a 100 % pressurized powder body are preferable, and the materials described above can be used in combination as needed. Their particle size is not particularly limited, but the primary particle diameter is preferably about 10 to 100 nm.

Blending quantity of the conductive particles 111 is not particularly limited, and it is preferable to blend them such that a value of volume percentage of the conductive particles 111 in the overall resin layer 103, which is taken as 100 %, is 5 to 50 %. If the blending quantity of the conductive particles 111 is too small, the number of linking points between the conductive particles 111 becomes small resulting in high resistance at normal temperature. If the blending quantity of the conductive particles 111 is too large, contact between the conductive particles 111 is maintained even at elevated temperature so that the shutdown function tends to be spoiled. The value may be, for example, 5, 10, 15, 20, 25, 30, 35, 40, 45 or 50% as well as a value in the range between any two of the exemplified values.

### (5) Method of preparing roughened surface

Surface geometry (surface roughness) of the roughened surface 109 of the resin layer 103 of the present embodiment can be obtained by dispersing the conductive particles 111 by a predetermined dispersing method and further coating under a predetermined baking condition.

Dispersing state of the conductive particles 111 of the present embodiment is obtained, for example, by the following dispersing method. Conventionally, dispersing a conductive material was performed with the main aim of dispersing it finely and uniformly, however, a moderately aggregated dispersing state is preferable in the present embodiment, and a method therefore will be described below. As a dispersing machine, a disperser, a planetary mixer, a ball mill or the like can be used, and described below is a case where a disperser is used.

The dispersing state of the conductive particles 111 of the present embodiment is achieved by preliminarily dispersing the conductive particles 111 in a solution of a fluorine-based resin or an olefin-based resin and further performing main dispersion. In the preliminary dispersion, the conductive material is added to the resin solution such that the concentration of the conductive material in the solid components (solid component of resin + conductive material) is 10 to 70 % by volume, and stirred at a rotation speed of 300 to 5,000 rpm for 2 to 60 minutes, to produce a preliminary coating material. Note that, in the present embodiment, a volume part is calculated according to the formula: volume part (ml) = mass part (g) / true specific gravity, and a volume percentage is calculated based thereon. If the amount of the conductive particles in the preliminary dispersion is less than 10 % by volume, the particle diameter after the main dispersion is sometimes too small, and if the amount is more than 70 % by volume, the particle diameter after the main dispersion is sometimes too large. If the rotation speed in the preliminary dispersion is lower than 300 rpm, the particle diameter after the main dispersion is sometimes too large, and if the rotation speed is higher than 5,000 rpm, the particle diameter after the main dispersion is sometimes too small. If the stirring period is shorter than 2 minutes, the particle diameter after the main dispersion is sometimes too large, and if the stirring period is longer than 60 minutes, the particle diameter after the main dispersion is sometimes too small.

Then, in the main dispersion, the resin solution is added to the preliminary dispersion paste such that the conductive material content in the resin layer is 5 to 50 % by volume (such that the concentration of the conductive material in the solid components of the resin solution (solid component of resin + conductive material) is 5 to 50 % by volume). In the main dispersion, stirring is performed at a rotation rate of 500 to 8,000 rpm for 10 to 120 minutes. If the rotation speed in the main dispersion is lower than 500 rpm, the particle diameter is sometimes too large, and if the rotation speed is higher than 8,000 rpm, the particle diameter is sometimes too small. If the time period of stirring in the main dispersion is shorter than 10 minutes, the particle diameter is sometimes too large, and if the time period of stirring is longer than 120 minutes, the particle diameter is sometimes too small.

The method of manufacturing the current collector 100 of the present embodiment is not particularly limited, with the resin layer 103 being formed on the conductive base material 102 by a known method, and subjecting the conductive base material 102 to a pretreatment that enhances adhesiveness before forming the resin layer 103 is effective. Especially when metal foil that has been manufactured through rolling is used, rolling oil or wear debris sometimes remains, so that adhesiveness to the resin layer is sometimes lowered, however, in such a case, by removing the rolling oil or wear debris through delipidation or the like, it is possible to enhance the adhesiveness to the resin layer 103. Further, it is also possible to enhance the adhesiveness to the resin layer 103 by a dry activation process such as a corona discharge process.

The method of applying the above-mentioned paste containing the conductive material 111 is not particularly limited, and a known method can be employed such as the cast method, the bar coater method, the dip method, or the gravure coat method. Likewise, the method of drying is not particularly limited, and drying by heating in a circulating hot air oven or the like may be employed.

### <Active material layer>

The electrode structure 110 of the present embodiment is provided with the active material layer 105 containing an active material, laminated on the resin layer 103. Since the electrode structure 110 is provided with the active material layer 105 containing active material particles 121, on the current collector 100, it has a good discharge property.

By forming an active material layer or an electrode material layer on at least one surface of the current collector 100 of the present embodiment, the electrode structure 110 of the present embodiment can be obtained. The electrode structure having an electrode material layer, for an electrical storage device, will be described later. Firstly, in the case of the electrode structure 110 provided with an active material layer 105, an electrode structure (including a battery component) for a non-aqueous electrolyte battery, e.g., a lithium-ion secondary battery, can be manufactured by using the electrode structure 110, a separator, a non-aqueous electrolyte and the like. In the electrode structure 110 for a non-aqueous electrolyte battery as well as the non-aqueous electrolyte battery of the current embodiment, known members for non-aqueous batteries can be used for the members other than the current collector 100.

Here, the active material layer 105 to be formed in the electrode structure 100 in the present embodiment may be one which has been conventionally proposed for a non-aqueous electrolyte battery. For example, the current collector 100 of the present embodiment employing aluminum is used for the cathode, while LiCoO₂, LiMnO₂, LiNiO₂ or the like is used as the active material 121 and carbon black such as acetylene black is used as the conductive particles 123; these materials are dispersed in PVDF or water dispersion-type PTFE as the binder 125 to form a paste, and the paste is applied and dried to produce a cathode structure of the present embodiment.

To use the electrode structure 110 for an anode, the current collector 110 of the present embodiment employing copper as the conductive base material 102 is used, while black lead, graphite, mesocarbon microbead or the like is used as the active material 121; the material is dispersed in CMC as a thickener and then mixed with SBR as a binder to form a paste, and the paste is applied as a material for forming the active material layer 105 and dried to produce an anode structure of the present embodiment.

An embodiment of the present invention has been described thus far with reference to the drawings, however, the embodiment is only an exemplification of the invention, and various configurations other than those described above can be adopted.

### Examples

Hereafter, the present invention will be further described with some examples, but the examples should not be understood for limiting the invention.

### <Formation of resin layer on conductive base material>

Coating materials using various resins were prepared according to Table 1. For the olefin-based resin, a water-based emulsion was used in which the solid component of the individual resin was contained at a concentration of 5 to 40 % by weight. The mixture of polypropylene and polyethylene in Example 18 was prepared such that the blending ratio of polypropylene was 50 % based on a DSC chart of a coating film.

For the PVDF-based resin, N-methyl-2-pyrolidone solution with a solid component of 10 to 15 % by weight was used. For the epoxy resin, a solution was used where a bisphenol A-type resin and a urea resin were dissolved in methyl ethyl ketone such that the solid component was 20 % by weight. For the polyester resin, a solution was used where a polyester resin produced through an esterification reaction of isophthalic acid and ethylene glycol was dissolved in xylene such that the solid component was 20 % by weight. For the urethane-based resin, a solution was used where a urethane resin, which was produced through a reaction of isophorone diisocyanate and polyethylene glycol, and butylated melamine were dissolved in xylene such that the solid component was 20 % by weight. For the acrylic resin, a water-based emulsion of a copolymer of butyl acrylate, acrylonitrile and acrylic amide, with a solid component of 20 % by weight, was used. Molecular weight was measured by GPC (gel permeation chromatography) in a state of liquid of each resin. Pastes obtained by the preliminary dispersion and the main dispersion performed under the conditions shown in Table 2 were applied onto aluminum foil, and baked at a baking temperature (temperature reaching the base material) of 100 °C for a baking time (in-furnace time) of 120 seconds to form a CC layer (carbon coated layer) on the aluminum foil.

Note that, in the Tables 1 to 3 below, the meanings of the abbreviations are as follows.
AB: acetylene black
PP: polypropylene
PE: polyethylene
PEO: polyethylene oxide
PVDF: polyvinylidene difluoride

**Table 1**

| | Binder | | | | | |
|---|---|---|---|---|---|---|
| | Resin 1 | | | Resin 2 | | |
| | Type | Weight Average Molecular Weight | Content (Volume of Resin Solid Content %) | Type | Weight Average Molecular Weight | Content (Volume of Resin Solid Content %) |
| Example 1 | Dicarboxylic Acid-Modified PP | 60,000 | 100 | None | - | - |
| Example 2 | Dicarboxylic Acid-Modified PP | 60,000 | 100 | None | - | - |
| Example 3 | Epoxy-Based | 20,000 | 100 | None | - | - |
| Example 4 | Monocarboxylic Acid-Modified PP | 50,000 | 100 | None | - | - |
| Example 5 | Dicarboxylic Acid-Modified PP | 50,000 | 100 | None | - | - |
| Example 6 | Tricarboxylic Acid-Modified PP | 50,000 | 100 | None | - | - |
| Example 7 | PVDF | 300,000 | 100 | None | - | - |
| Example 8 | Acrylic Acid-Modified PVDF | 250,000 | 100 | None | | |
| Example 9 | Polyester-Resin | 40,000 | 100 | None | | |
| Example 10 | Urethane-Resin | 50,000 | 100 | None | - | - |
| Example 11 | Acrylic Resin | 30,000 | 100 | None | - | - |
| Example 12 | Dicarboxylic Acid-Modified PP | 60,000 | 50 | PEO | 1,500,000 | 50 |
| Example 13 | Dicarboxylic Acid-Modified PP | 60,000 | 50 | Ethylene-Glycidyl Acrylate Copolymer | 30,000 | 50 |
| Example 14 | Ethylene-Methyl Acrylate Copolymer | 30,000 | 100 | None | - | - |
| Example 15 | Ethylene-Ethyl Acrylate Copolymer | 30,000 | 100 | None | - | - |
| Example 16 | Ethylene-Glycidyl Acrylate Copolymer | 30,000 | 100 | None | | |
| Example 17 | Ethylene-Glycidyl Methacrylate Copolymer | 30,000 | 100 | None | - | - |
| Example 18 | PP | 50,000 | 50 | PE | 50,000 | 50 |
| Comparative Example 1 | Dicarboxylic Acid-Modified PP | 60,000 | 100 | None | - | - |
| Comparative Example 2 | Dicarboxylic Acid-Modified PP | 60,000 | 100 | None | - | - |
| Comparative Example 3 | Dicarboxylic Acid-Modified PP | 60,000 | 100 | None | - | - |
| Comparative Example 4 | Dicarboxylic Acid-Modified PP | 60,000 | 100 | None | - | - |
| Comparative Example 5 | Dicarboxylic Acid-Modified PP | 60,000 | 100 | None | - | - |
| Comparative Example 6 | Dicarboxylic Acid-Modified PP | 60,000 | 100 | None | - | - |

**Table 2**

| | Dispersion Condition of Conductive Material | | | | | | |
|---|---|---|---|---|---|---|---|
| | Preliminary Dispersion | | | | Main Dispersion | | |
| | Type | Content of Conductive Material (Volume in Solid Content of Resin Liquid Added with Conductive Material %) | Number of Rotations (rpm) | Time (minute) | Content of Conductive Material (Volume in Solid Content of Resin Liquid Added with Conductive Material %) | Number of Rotations (rpm) | Time (minute) |
| Example 1 | AB | 40 | 5,000 | 60 | 30 | 8,000 | 120 |
| Example 2 | AB | 70 | 300 | 10 | 10 | 500 | 10 |
| Example 3 | AB | 50 | 300 | 10 | 30 | 500 | 10 |
| Example 4 | AB | 60 | 600 | 30 | 20 | 1,000 | 30 |
| Example 5 | AB | 60 | 600 | 30 | 20 | 1,000 | 30 |
| Example 6 | AB | 60 | 600 | 30 | 20 | 1,000 | 30 |
| Example 7 | AB | 40 | 500 | 40 | 30 | 800 | 20 |
| Example 8 | AB | 40 | 500 | 40 | 30 | 800 | 20 |
| Example 9 | AB | 50 | 1,000 | 30 | 30 | 2,000 | 60 |
| Example 10 | AB | 50 | 1,000 | 30 | 30 | 2,000 | 60 |
| Example 11 | AB | 50 | 1,000 | 30 | 30 | 2,000 | 60 |
| Example 12 | AB | 50 | 1,000 | 30 | 20 | 2,000 | 60 |
| Example 13 | AB | 50 | 1,000 | 30 | 20 | 2,000 | 60 |
| Example 14 | AB | 50 | 1,000 | 30 | 20 | 2,000 | 60 |
| Example 15 | AB | 50 | 1,000 | 30 | 20 | 2,000 | 60 |
| Example 16 | AB | 50 | 1,000 | 30 | 20 | 2,000 | 60 |
| Example 17 | AB | 50 | 1,000 | 30 | 20 | 2,000 | 60 |
| Example 18 | AB | 50 | 1,000 | 30 | 20 | 2,000 | 60 |
| Comparative Example 1 | AB | 40 | 5,000 | 60 | 30 | 8,000 | 120 |
| Comparative Example 2 | AB | 70 | 300 | 10 | 10 | 500 | 20 |
| Comparative Example 3 | AB | 30 | 6,000 | 60 | 20 | 8,000 | 150 |
| Comparative Example 4 | AB | 80 | 300 | 10 | 15 | 400 | 20 |
| Comparative Example 5 | AB | 50 | 6,000 | 90 | 40 | 8,000 | 150 |
| Comparative Example 6 | AB | 50 | 500 | 10 | 8 | 1,000 | 20 |

### <Method of evaluation>

### (1) Deposition amount

Applied foil was cut into a 100 mm square piece, and the weight was measured. The coating film was removed and the weight was measured again, and the deposition amount was calculated from the difference. The result of the measurement is shown in Table 3.

### (2) Measurement of roughness

A surface roughness measurement instrument (Kosaka Laboratory Ltd., SE-30D) was used for measurement (reference length: 2.5 mm, cutoff λc: 0.8 mm, driving speed: 0.1 mm/s). Rz (ten point average roughness) and Sm (average spacing of ruggedness) were measured in accordance with JIS B0601. The result of measurement (average of n = 5) is shown in Table 3.

### (3) Resistance

Initial resistance was measured on a CC layer (carbon coated layer) formed on aluminum foil as resistance by Loresta EP (two-terminal method), a resistivity meter manufactured by Mitsubishi Chemical Analytech Co., Ltd.,. The result of measurement (average of n = 10) is shown in Table 3.

### (4) Capacity retention

### (4-1) Manufacturing of battery

### (4-1-1) Manufacturing of cathode

An active material paste (LiMn₂O_{4/}AB/PVDF = 89.5/5/5.5, solvent: NMP (N-methyl-2-pyrrolidone)) was applied onto the current collector having the resin layer manufactured by the above method, and dried. Further, press was applied to form an active material layer of 60 µm thickness.

### (4-1-2) Manufacturing of anode

An active material paste (MCMB (mesocarbon microbead)/AB/PVDF = 93/2/5, solvent: NMP) was applied onto copper foil of 10 µm thickness and dried. Further, press was applied to form an active material layer of 40 µm thickness.

### (4-1-3) Manufacturing of cylindrical lithium-ion battery

These cathode and anode, an electrolyte (1M LiPF₆, EC (ethylene carbonate)/MEC (methyl ethyl carbonate) = 3/7), and a separator (thickness: 25 µm, microporous polyethylene film) were wound, and leads were welded to the cathode and anode and connected to terminals thereof, which were inserted in a case to produce a cylindrical lithium-ion battery (ϕ 18 mm × axial length 65 mm).

### (4-2) Measurement of capacity retention (high-rate property)

Using the cylindrical lithium-ion battery, constant voltage and constant current charging was performed at 0.25 mA/cm² up to 4.2 V followed by constant current discharging at 0.25 mA/cm² and 5 mA/cm², respectively, and discharge retention = (discharged capacity at 5 mA/cm²) / (discharged capacity at 0.25 mA/cm²) was calculated from their discharged capacity values. A capacity retention of 0.8 or higher means that high-rate use is possible. The result of measurement is shown in Table 3.

### (4-3) Overcharging test

Using the cylindrical lithium-ion battery described above, constant voltage and constant current charging was performed up to 4.2 V at 1.5 mA/cm², and the cylindrical lithium-ion battery in the fully charged state was further charged at 5 A until 250 % charging was reached, to examine behavior of the cylindrical lithium-ion battery. The result of measurement is shown in Table 3.

**Table 3**

| | Deposition Amount (g/m²) | Degree of Roughness | | Resistance (Ω) | Capacity Retention | Overcharging Test |
|---|---|---|---|---|---|---|
| | | Rz (µm) | Sm (µm) | | | |
| Example 1 | 0.5 | 0.4 | 5 | 4 | 91% | No Change |
| Example 2 | 19.0 | 10 | 198 | 48 | 81% | No Change |
| Example 3 | 5.6 | 2.4 | 31 | 41 | 82% | No Change |
| Example 4 | 5.1 | 3.4 | 22 | 11 | 91% | No Change |
| Example 5 | 5.3 | 3.6 | 28 | 12 | 92% | No Change |
| Example 6 | 5.0 | 3.2 | 24 | 11 | 91% | No Change |
| Example 7 | 5.2 | 4.1 | 31 | 3.4 | 94% | No Change |
| Example 8 | 5.1 | 4.7 | 33 | 3.3 | 95% | No Change |
| Example 9 | 5.7 | 2.4 | 18 | 28 | 83% | No Change |
| Example 10 | 5.6 | 3.1 | 19 | 36 | 82% | No Change |
| Example 11 | 5.8 | 2.8 | 23 | 31 | 83% | No Change |
| Example 12 | 5.5 | 3.6 | 29 | 16 | 95% | No Change |
| Example 13 | 5.1 | 3.3 | 32 | 18 | 96% | No Change |
| Example 14 | 5.4 | 3.5 | 32 | 27 | 86% | No Change |
| Example 15 | 5.0 | 3.4 | 30 | 25 | 87% | No Change |
| Example 16 | 5.1 | 3.5 | 28 | 17 | 91% | No Change |
| Example 17 | 5.9 | 3.3 | 27 | 16 | 91% | No Change |
| Example 18 | 5.0 | 3.2 | 29 | 21 | 90% | No Change |
| Comparative Example 1 | 0.3 | 0.2 | 6 | 0.3 | 92% | Smoke Generation |
| Comparative Example 2 | 25.0 | 9 | 1 | 55 | 73% | No Change |
| Comparative Example 3 | 5.0 | 0.3 | 27 | 0.5 | 91% | Smoke Generation |
| Comparative Example 4 | 5.7 | 12 | 184 | 47 | 74% | No Change |
| Comparative Example 5 | 5.4 | 0.7 | 2 | 11 | 92% | Smoke Generation |
| Comparative Example 6 | 6.0 | 41 | 210 | 49 | 73% | No Change |

### <Discussion of result>

In Examples 1 to 18, the measurement of capacity retention (high-rate property) is 0.80 or more and the result of overcharging is good without any change of the battery, each being at a level enough for practical use, while in Comparative Examples 1 to 6, the measurement of capacity retention (high-rate property) is less than 0.80 or the result of overcharging is smoke generation (a state where the shutdown function is insufficient so that smoke is generated from the battery), each being not suitable for practical use. This indicates that, in Examples 1 to 18, since the CC layer (carbon coated layer) having the special roughened surface is provided, sufficient space for room of thermal expansion of the CC layer (carbon coated layer) is successfully secured on the surface of the CC layer (carbon coated layer). Therefore, it can be understood that even if volume change of various organic resins at melting is large, thermal expansion can take place without difficulty, so that an excellent PTC property is achieved.

Hereinbefore, the present invention has been described based on the examples. These examples are only exemplification, and it will be understood by a person skilled in the art that various modifications are possible and that such modifications fall within the present invention.

### DESCRIPTION OF THE REFERENCE SYMBOLS

100: current collector, 102: conductive base material, 103: resin layer, 105: active material layer, 107: organic resin, 109: roughened surface, 110: electrode structure, 111: conductive particle, 121: active material, 123 conductive material, 125: binder, 202: conductive base material, 203: PTC layer, 205: active material layer, 207: binder resin, 210: electrode structure, 211: conductive path, 302: conductive base material, 303: PTC layer, 305: active material layer, 307: binder resin, 310: electrode structure, 311: conductive path

## Claims

1. A current collector (100) comprising:
a conductive base material (102); and
a resin layer (103) formed on at least one surface of the conductive base material (102),
wherein
the resin layer (103) contains an organic resin (107) and conductive particles (111),
a deposition amount of the resin layer (103) on the conductive base material (102) is 0.5 to 20 g/m²,
an average of resistance of the resin layer (103) measured by the two-terminal method is 0.5 to 50 Ω, and
the resin layer (103) is a PTC layer,
**characterised in that** the ten point average roughness (Rz) of the surface of the resin layer is 0.4 to 10 µm, and the average spacing of ruggedness (Sm) of the surface of the resin layer is 5 to 200 µm.

2. A current collector (100) of Claim 1, wherein the organic resin (107) is one or more kinds of resins selected from the group consisting of a fluorine-based resin, an olefin-based resin, an epoxy-based resin, an acrylic-based resin, a polyester-based resin, and a urethane-based resin.

3. A current collector of Claim 2, wherein the fluorine-based resin has a carboxylic group or a carboxylic ester group.

4. A current collector of Claim 2, wherein the olefin-based resin has a carboxylic group or a carboxylic ester group.

5. A current collector of Claim 2, wherein the olefin-based resin includes at least one kind of acrylic ester and methacrylic ester.

6. A current collector of Claim 2, wherein the olefin-based resin includes a polypropylene-based resin and a polyethylene-based resin.

7. An electrode structure (110) comprising:
the current collector (100) of any one of Claims 1 to 6; and
an active material layer (105) or an electrode material layer provided on the resin layer (103) of the current collector (100).

8. A non-aqueous electrolyte battery or electrical storage device comprising:
the current collector (100) of any one of Claims 1 to 6; and
an active material layer(105) or an electrode material layer provided on the resin layer (103) of the current collector (100).

## Patentansprüche

1. Stromkollektor (100), umfassend:
ein leitfähiges Basismaterial (102); und
eine Harzschicht (103), die auf mindestens einer Oberfläche des leitfähigen Basismaterials (102) ausgebildet ist,
wobei
die Harzschicht (103) ein organisches Harz (107) und leitfähige Partikel (111) enthält,
eine Abscheidungsmenge der Harzschicht (103) auf dem leitfähigen Basismaterial (102) 0,5 bis 20 g/m² beträgt,
ein mittlerer Widerstand der Harzschicht (103), gemessen mittels des Zweipolverfahrens, 0,5 bis 50 Ω beträgt und
die Harzschicht (103) eine PTC-Schicht ist,
**dadurch gekennzeichnet, dass** die Zehn-Punkt-Durchschnittsrauheit (Rz) der Oberfläche der Harzschicht 0,4 bis 10 µm beträgt und der mittlere Rauheitsabstand (Sm) der Oberfläche der Harzschicht 5 bis 200 µm beträgt.

2. Stromkollektor (100) nach Anspruch 1, wobei das organische Harz (107) eine oder mehr Harzarten ist, ausgewählt aus der Gruppe, die aus einem Harz auf Fluorbasis, einem Harz auf Olefinbasis, einem Harz auf Epoxidbasis, einem Harz auf Acrylbasis, einem Harz auf Polyesterbasis und einem Harz auf Urethanbasis besteht.

3. Stromkollektor nach Anspruch 2, wobei das Harz auf Fluorbasis eine Carboxylgruppe oder eine Carboxylestergruppe aufweist.

4. Stromkollektor nach Anspruch 2, wobei das Harz auf Olefinbasis eine Carboxylgruppe oder eine Carboxylestergruppe aufweist.

5. Stromkollektor nach Anspruch 2, wobei das Harz auf Olefinbasis mindestens eine Art von Acrylester und Methacrylester einschließt.

6. Stromkollektor nach Anspruch 2, wobei das Harz auf Olefinbasis ein Harz auf Polypropylenbasis und ein Harz auf Polyethylenbasis einschließt.

7. Elektrodenstruktur (110), umfassend:
den Stromkollektor (100) nach einem der Ansprüche 1 bis 6; und
eine aktive Materialschicht (105) oder eine Elektrodenmaterialschicht, vorgesehen auf der Harzschicht (103) des Stromkollektors (100).

8. Batterie mit wasserfreiem Elektrolyt oder elektrische Speichervorrichtung, umfassend:
den Stromkollektor (100) nach einem der Ansprüche 1 bis 6; und
eine aktive Materialschicht (105) oder eine Elektrodenmaterialschicht, vorgesehen auf der Harzschicht (103) des Stromkollektors (100).

## Revendications

1. Collecteur de courant (100) comprenant :
un substrat électroconducteur (102) ; et
une couche de résine (103) formée sur au moins une surface du substrat électroconducteur (102),
où
la couche de résine (103) contient une résine organique (107) et des particules conductrices (111),
une quantité de dépôt de la couche de résine (103) sur le substrat électroconducteur (102) est comprise entre 0,5 et 20 g/m²,
une résistance moyenne de la couche de résine (103) mesurée par la méthode à deux bornes est comprise entre 0,5 et 50 Ω, et où
la couche de résine (103) est une couche PTC,
**caractérisé en ce que** la rugosité moyenne sur dix points (Rz) de la surface de la couche de résine est comprise entre 0, 4 et 10 µm, et l'intervalle moyen entre concavités et convexités (Sm) de la surface de la couche de résine est compris entre 5 et 200 µm.

2. Collecteur de courant (100) selon la revendication 1, où la résine organique (107) consiste en une ou plusieurs sortes de résines sélectionnées dans le groupe se composant d'une résine à base de fluor, d'une résine à base d'oléfine, d'une résine époxydique, d'une résine acrylique, d'une résine polyester et d'une résine uréthane.

3. Collecteur de courant selon la revendication 2, où la résine à base de fluor comprend un groupe carboxylique ou un groupe ester carboxylique.

4. Collecteur de courant selon la revendication 2, où la résine à base d'oléfine comprend un groupe carboxylique ou un groupe ester carboxylique.

5. Collecteur de courant selon la revendication 2, où la résine à base d'oléfine comprend au moins une sorte d'ester acrylique et d'ester méthacrylique.

6. Collecteur de courant selon la revendication 2, où la résine à base d'oléfine comprend une résine à base de polypropylène et une résine à base de polyéthylène.

7. Structure d'électrode (110) comprenant :
le collecteur de courant (100) selon l'une des revendications 1 à 6 ; et
une couche de matériau actif (105) ou une couche de matériau d'électrode prévue sur la couche de résine (103) du collecteur de courant (100).

8. Batterie à électrolyte non aqueuse ou dispositif d'accumulation électrique comprenant :
le collecteur de courant (100) selon l'une des revendications 1 à 6 ; et
une couche de matériau actif (105) ou une couche de matériau d'électrode prévue sur la couche de résine (103) du collecteur de courant (100).
